# EUROPÄISCHE PATENTSCHRIFT

(11) **EP 0 866 076 B1**
(45) Veröffentlichungstag und Bekanntmachung des Hinweises auf die Patenterteilung: **22.03.2006**
(21) Anmeldenummer: 98104104.9
(22) Anmeldetag: 07.03.1998
(51) Int. Cl.: C08B 37/16, G03G 9/087, C09D 5/03

(54) **Cyclooligosaccharid-Borkomplex**
Cycloologiosacharide-bore complex
Complexe de bore d'oligosaccharide cyclique

(30) Priorität: 18.03.1997 DE 19711260
(43) Veröffentlichungstag der Anmeldung: 23.09.1998
(73) Patentinhaber: Clariant Produkte (Deutschland) GmbH, 65929 Frankfurt am Main (DE)
(72) Erfinder: Baur, Rüdiger, Dr., 65817 Eppstein (DE); Macholdt, Hans-Tobias, Dr., 64297 Darmstadt-Eberstadt (DE)

(56) Entgegenhaltungen:
- EP-A- 0 742 230
- T. L. PAAL ET AL.: "Study of interactions in aqueous solutions containing cyclodextrin, glucose and borate" ACTA CHIMICA ACADEMIAE SCIENTIARUM HUNGARICAE, Bd. 106, Nr. 1, 1981, Seiten 9-15, XP002086339
- S. BHAT ET AL.: "Oxygenation of alkenes with t-BuOOH catalysed by B-cyclodextrin borate" TETRAHEDRON LETTERS, Bd. 37, Nr. 20, 1996, Seiten 3581-3584, XP002085983 uk

## Beschreibung

Die vorliegende Erfindung liegt auf dem technischen Gebiet der Ladungssteuermittel in Tonern und Entwicklern für elektrophotographische Aufzeichnungsverfahren, in Pulvern und Pulverlacken zur Oberflächenbeschichtung, in Elektretmaterialien, insbesondere in Elektretfasern, sowie in Trennvorgängen.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüberhinaus sind noch Spezialtoner, wie z.B. Magnettoner, Flüssigtoner oder Polymerisationstoner im Einsatz. Unter Polymerisationstonern sind solche Toner zu verstehen, die z.B. durch Suspensionspolymerisation (Kondensation) oder Emulsionspolymerisation entstehen und zu verbesserten Teilcheneigenschaften des Toners führen. Weiterhin sind auch solche Toner gemeint, die grundsätzlich in nicht-wäßrigen Dispersionen erzeugt werden. (L.B. Schein, "Electrophotography and Development Physics"; Springer Series in Electrophysics 14; Springer-Verlag, 1988).

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Da Tonerbindemittel in der Regel eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen.

Ladungssteuermittel, die nicht verhindern können, daß der Toner oder Entwickler bei längerer Gebrauchsdauer eine hohe Ladungsdrift zeigt (Alterung), die sogar bewirken kann, daß der Toner oder Entwickler eine Ladungsumkehr erfährt, sind daher für die Praxis ungeeignet.

Während für Schwarztoner schwarze, blaue oder dunkle Ladungssteuermittel eingesetzt werden können, sind für Farbtoner wegen der Coloristik Ladungssteuermittel ohne Eigenfarbe erforderlich.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-127). Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden.

Da dieses Vorgehen sehr aufwendig ist, sind hochwirksame farblose Ladungssteuermittel erforderlich, die imstande sind, das unterschiedliche triboelektrische Verhalten verschiedener Farbmittel zu kompensieren und dem Toner die gewünschte Aufladung zu verleihen. Auf diese Art und Weise können triboelektrisch sehr unterschiedliche Farbmittel anhand einer einmal erstellten Tonerbasisrezeptur mit ein und demselben Ladungssteuermittel in den verschiedenen erforderlichen Tonern (Gelb, Cyan, Magenta und gegebenenfalls Schwarz) eingesetzt werden.

Darüberhinaus ist für die Praxis wichtig, daß die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C von großem Vorteil. Wichtig ist auch, daß die Thermostabilität über einen längeren Zeitraum (ca. 30 Minuten) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, sowie Cycloolefincopolymere, einzeln oder in Kombination, die noch weitere Inhaltsstoffe, z.B. Farbmittel, wie Farbstoffe und Pigmente, Wachse oder Fließhilfsmittel, enthalten können oder im Nachhinein zugesetzt bekommen können, wie hochdisperse Kieselsäuren.

Für eine gute Dispergierbarkeit ist es von großem Vorteil, wenn das Ladungssteuermittel möglichst keine wachsartigen Eigenschaften, keine Klebrigkeit und einen Schmelz- oder Erweichungspunkt von > 150°C, besser > 200°C, aufweist. Eine Klebrigkeit führt häufig zu Problemen beim Zudosieren in die Tonerformulierung, und niedrige Schmelz- oder Erweichungspunkte können dazu führen, daß beim Eindispergieren keine homogene Verteilung erreicht wird, da sich das Material tröpfchenförmig im Trägermaterial zusammenschließt.

Außer in elektrophotographischen Tonern und Entwicklern können Ladungssteuermittel auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Gegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:
Beim Corona-Verfahren wird der Pulverlack oder das Pulver an einer geladenen Corona vorbeigeführt und hierbei aufgeladen, beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Auch eine Kombination von beiden Verfahren ist möglich. Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüberhinaus ist gefunden worden, daß Ladungssteuermittel das Aufladungs- sowie das Ladungsstabilitätsverhalten von Elektretmaterialien, insbesondere Elektretfasern, erheblich verbessern können (DE-A-43 21 289). Elektretfasern sind bisher hauptsächlich im Zusammenhang mit dem Problem der Feinststaubfiltration beschrieben worden. (Z.B. von Biermann, "Evaluation of permanently charged electrofibrous filters", 17. DOE Nuclear Air Cleaning Conference, Denver, USA, (1982). Die beschriebenen Filtermaterialien unterscheiden sich sowohl hinsichtlich der Materialien, aus denen die Fasern bestehen als auch bezüglich der Art und Weise, wie die elektrostatische Ladung auf die Fasern aufgebracht wird. Typische Elektretmaterialien basieren auf Polyolefinen, halogenierten Polyolefinen, Polyacrylaten, Polyacrylnitrilen, Ladungssteuermittel sind in der Literatur zahlreich bekannt. Allerdings weisen die bisher bekannten Ladungssteuermittel eine Reihe von Nachteilen auf, die den Einsatz in der Praxis stark einschränken oder gar unmöglich machen, wie z.B. Eigenfarbe, Photo- oder Thermolabilität, geringe Stabilität im Tonerbindemittel, ungenügende Wirksamkeit hinsichtlich des gewünschten Vorzeichens der Ladung (positive oder negative Aufladung), Ladungshöhe oder Ladungskonstanz, Dispergierbarkeit.

In der EP-A-0 687 959 sind Cyclodextrine als Ladungssteuermittel beschrieben. Diese haben jedoch den Nachteil einer relativ langsamen triboelektrischen Aufladbarkeit.

Aus der EP-A-0 742 230 sind Cyclodextrin-Einschlußverbindungen bekannt, in denen verschiedene organische oder anorganische Moleküle oder auch (Schwer)Metallionen in der Cavität des Cyclodextrin-Gerüsts eingelagert sind. Diese Einschlußverbindungen haben oftmals den Nachteil einer nicht ausreichenden Kurzzeitaufladung sowie, im Falle von Schwermetallionen, ökologische Nachteile.

Die Aufgabe der vorliegenden Erfindung war es daher, verbesserte, besonders wirksame farblose Ladungssteuermittel zu finden. Neben dem schnellen Erreichen und der Konstanz der Aufladung sollen die Verbindungen eine hohe Thermostabilität (Zersetzungstemperatur > 200°C) aufweisen. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren gut und unzersetzt dispergierbar sein. Darüberhinaus sollten sie öko/toxikologisch unbedenklich, d.h. ungiftig sowie schwermetallfrei sein. Weiterhin sollte ihre Wirkung unabhängig von der Harz/Carrier-Kombination sein, um eine breite Anwendung zu erschließen. Ebenso sollten sie in gängigen Pulverlack-Bindemitteln und Elektretmaterialien wie z. B. Polyethylenstyrol (PES), Epoxid-PES-Epoxyhybrid, Polyurethan, Acrylsystemen sowie Polypropylenen gut und unzersetzt dispergierbar sein und zu keiner Verfärbung der Harze führen.

Überraschenderweise hat sich nun gezeigt, daß aus der Vielzahl beschriebener Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung auf unterschiedliche Weise erhalten, nämlich durch Corona- oder Triboaufladung.

Weiterhin ist bekannt, daß Ladungssteuermittel in elektrostatischen Trennvorgängen, insbesondere in Trennvorgängen von Polymeren verwendet werden können. So beschreiben Y. Higashiyama et al. (J. Electrostatics 30, pp 203-212 (1993)) am Beispiel des äußerlich aufgebrachten Ladungssteuermittels Trimethyl-phenyl-ammonium-tetraphenylborat, wie Polymere für Recyclingzwecke voneinander getrennt werden können. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel kann auch grundsätzlich an eine Einarbeitung derselben in das Polymer gedacht werden, um beispielsweise ein Polymer innerhalb der triboelektrischen Spannungsreihe zu verschieben und eine entsprechende Trennwirkung zu erhalten. Ebenso lassen sich auf diese Weise andere Polymere wie z.B. Polypropylen (PP) und/oder Polyethylenterephthalat (PET) und/oder Polyvinylchlorid (PVC) voneinander trennen.

Ebenso lassen sich auch z.B. Salzmineralien besonders gut selektiv trennen, wenn ihnen zuvor ein Oberflächenzusatz zugegeben wurde (Oberflächenkonditionierung), der die substratspezifische elektrostatische Aufladung verbessert (A. Singewald, L. Ernst, Zeitschrift für Physikal. Chem. Neue Folge, Bd. 124, S. 223-248 (1981).

Weiterhin werden Ladungssteuermittel als "Electroconductivity Providing Agents" (ECPA) (JP 05 163 449-A) in Tinten für Tintenstrahldrucker eingesetzt.

Cyclooligo-Saccharide die Cyclodextrin-Boratkomplexe gute Ladungssteuereigenschaften und hohe Thermostabilität besitzen. Darüberhinaus sind diese Verbindungen ohne Eigenfarbe und lassen sich hervorragend in unterschiedlichen Toner-, Pulverlack- und Elektretbindemitteln dispergieren.

Gegenstand der vorliegenden Erfindung ist die Verwendung von Cyclodextrin-Borat-Komplexen, bestehend aus 1 bis 4, vorzugsweise 1 oder 2, Cyclodextrin-Einheiten und einem Borat-Rest der Formel (I) 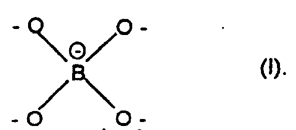 als Ladungssteuermittel und Aufladungsverbesserer in elektrophotographischen Tonern und Entwicklern, in triboelektrisch oder elektrokinetisch versprühbaren Pulvern und Pulverlacken und in Elektretmaterialien.

NMR-Untersuchungen lassen den Schluß zu, daß ein Borat-Rest der Formel (I) über Sauerstoffatome esterartig mit mindestens einem Cyclodextrin-Molekül verknüpft ist.

Die Herstellung von Cyclodextrinen ist in der Literatur vielfach beschrieben (Beilstein "Handbuch der Organischen Chemie; Syst. Nr. 3011, 5. Erg. Werk Bd. 19/12; Angew. Chem. 92 (1980) 343, D. French, M.L. Levine, J.H. Pazur, E. Norberg J. Am. Chem. Soc. 71 (1949) 353). In einer typischen Variante erfolgt die Synthese der Cyclodextrine durch Umsetzung von Stärke mit Kulturen des Bacillus macerans. Aus dem Gemisch können die einzelnen cyclischen Systeme durch fraktionierte Kristallisation oder mit chromatographischen Methoden getrennt werden.

Es sind Alpha-, Beta- und Gamma-Cyclodextrine bekannt, deren Bezeichnung sich nach der Anzahl der ringförmig verknüpften Saccharid-Monomere richtet. Ein ringförmig 1,4-verknüpftes Oligosaccharid, bestehend aus 6 Saccharid-Monomeren wird Alpha-Cyclodextrin, aus 7 Saccharid-Monomeren Beta-Cyclodextrin und aus 8 Saccharid-Monomeren Gamma-Cyclodextrin genannt.
Unter Cyclodextrinen sollen vorzugsweise solche verstanden werden, die im Handel erhältlich sind, wie z.B. α-Cyclodextrin, β-Cyclodextrin, γ-Cyclodextrin, Methyl-α-cyclodextrin, Methyl-β-cyclodextrin, Methyl-γ-cyclodextrin, Acetyl-β-cyclodextrin und Acetyl-γ-cyclodextrin.

Geeignete Borverbindungen zur Herstellung der erfindungsgemäßen Cyclodextrin-Borat-Verbindungen sind kommerziell erhältlich, beispielsweise Orthoborsäure, Borsäurechloride oder -bromide, z.B. BCl₃, Borsäureanhydrid (Boroxid) oder Alkalimetallborate, z. B. Borax.

Cyclodextrin-Borat Komplexe sind bekannt aus T.L. Paál und J. Szejtli, Acta Chimica Scientiarum Hungaricae 106(1), 9-15, 1981.

Die Herstellung eines Cyclodextrin-Borat-Komplexes kann dadurch erfolgen daß man ein Cyclodextrin mit einer der vorstehend genannten Borverbindungen in wäßrigem akalischem Medium, z. B. im pH-Bereich zwischen 7 und 14, bevorzugt zwischen 8 und 14, besonders bevorzugt zwischen 9 und 13, umsetzt. Es ist auch möglich, ein wäßrigorganisches Medium einzusetzen, wobei das organische Lösemittel vorzugsweise ein wasserlöslicher Alkohol, wie Methanol, Ethanol oder Isopropanol, ist. Die Mengen an organischem Lösemittel sollten so bemessen werden, daß die Reaktionspartner in Lösung bleiben und das flüssige Medium einphasig bleibt. Vorteilhaft sind Reaktionstemperaturen zwischen 0 und 80°C, insbesondere zwischen 20 und 60°C. Die molaren Mengenverhältnisse der eingesetzten Reaktanden Cyclodextrin:Borverbindung liegen bevorzugt zwischen 1 : 0,1 und 1 : 10, bevorzugt zwischen 1 : 0,5 und 1 : 5, insbesondere bei etwa 1:2.

Im Hinblick auf eine hohe Raum-Zeit-Ausbeute ist es zweckmäßig, die Umsetzung in möglichst konzentrierter Lösung durchzuführen. Prinzipiell ist es jedoch möglich, auch in verdünnten Lösungen, beispielsweise 1 %ige, zu arbeiten.

Als Basen zur Einstellung des gewünschten pH-Wertes werden vorteilhaft Hydroxide oder Alkoholate oder Kombinationen davon verwendet, besonders bevorzugt sind Alkalimetallhydroxide, wie NaOH oder Alkoholate, wie Na-methanolat/Methanol.

Die Isolierung der Cyclodextrin-Borat-Komplexe erfolgt zweckmäßigerweise durch Eintragen oder Zugabe in einen Überschuß von organischem Lösemittel, z.B. Alkohole, unterstützt durch Temperaturerniedrigung. Der sich bildende weiße Niederschlag wird filtriert und vorteilhaft bei Temperaturen zwischen 30 und 120°C, besonders vorteilhaft zwischen 50 und 100°C, unterstützt durch Vakuum getrocknet. Durch die Trocknungszeit, Temperatur und Vakuum läßt sich der RestWassergehalt steuern, der zwischen 0,1 Gew.-% und 25 Gew.-%, vorteilhaft zwischen 3 Gew.-% und 20 Gew.-%, liegt.

Zur Isolierung bietet sich auch eine Sprühtrocknung an, wobei die gewünschten Verbindungen unzersetzt erhältlich sind. Zur Erniedrigung des Feuchtegehaltes kann noch nachgetrocknet werden.

Es ist weiterhin möglich, die erfindungsgemäß verwendeten Verbindungen durch Kneten oder Flushen der Reaktanden mit geeigneten Knetern, Extrudern oder Mischern herzustellen, indem sie in alkalischem Medium angeteigt und intensiv vermischt werden. Der Wassergehalt dieses Teiges kann zwischen 1 und 30 Gew.-%, bevorzugt zwischen 5 und 20 Gew.-%, liegen.

Die Bildung der erfindungsgemäß verwendeten Cyclodextrin-Borat-Komplexe läßt sich durch UV-Spektren, NMR-spektroskopische Aufnahmen, DTA sowie Elementaranalyse nachweisen. Die Ausgangsprodukte, z.B. β-Cyclodextrin und Orthoborsäure weisen im UV-Spektrum zwischen 200 und 500 nm in Wasser keine Absorption auf. Nach der Reaktion ist eine Komplex-Bildung an einer Absorptionsbande zwischen 200 und 300 nm nachweisbar.

NMR-spektroskopische Messungen sowohl in kondensierter Phase (DMSO) mit HD-Austausch als auch Festkörper-NMR-Messungen weisen auf eine Komplexierung bzw. eine Veresterung hin. Weiterhin ist eine Verschiebung der Zersetzungstemperatur gegenüber reinen Cyclodextrinen durch DifferentialThermoanalyse feststellbar. Je nach Synthesebedingungen werden meist Borgehalte zwischen 0,1 % und 5 % gefunden, bestimmt durch Elementaranalyse.

Die erfindungsgemäß verwendeten Verbindungen sind überraschend vielfältig einsetzbare Ladungssteuermittel, die genau auf das jeweilige Harz/Toner-System abgestimmt werden können. Hinzu kommt, daß die erfindungsgemäß eingesetzten Verbindungen farblos und rieselfähig sind und besonders hohe und konstante Ladungssteuereigenschaften, gute Thermostabilitäten und sehr gute Dispergierbarkeiten besitzen. Ein weiterer technischer Vorteil dieser Verbindungen liegt darin, daß sie sich gegenüber den unterschiedlichen Bindemittelsystemen inert verhalten und somit vielfältig einsetzbar sind.

Es ist weiterhin von Vorteil, daß die Synthese der erfindungsgemäß verwendeten Verbindungen und die Dispergierung im Bindemittel in einem Arbeitsschritt durchgeführt werden können. Nach dem Anteigen der Reaktanden können diese im Bindemittel-System mittels Kneter, Mischer, Extruder oder Walzenstühlen bei Temperaturen ab dem Erweichungspunkt dispergiert werden, wobei gleichzeitig die Synthese der erfindungsgemäß verwendeten Verbindungen stattfindet.

Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.

Je nach den stoffspezifischen Eigenschaften des Ladungssteuermittels, das kristallin, semi- oder teiikristallin oder röntgenamorph sein kann, bedeutet eine sehr gute Dispergierung eine homogene Verteilung des Ladungssteuermittels im jeweiligen Bindemittel.

Es ist bekannt, daß kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden. Die Ladungssteuermittel-Partikel, die nach der Dispergierung im Bindemittel vorliegen, sollten kleiner als 1 µm, vorzugsweise kleiner als 0,5 µm, sein, wobei eine enge Teilchengrößen-Verteilung von Vorteil ist.

Je nach Energieaufwand spricht man von leicht- bis schwerdispergierbaren Stoffen.

Die Dispergierbarkeit ist eng mit den stoffspezifischen, chemisch/physikalischen Eigenschaften verknüpft. Bestimmend sind Konstitution; Festkörper-Morphologie; Modifikation/Kristallisation; Korngröße und Verteilung, Größe z.B. bestimmt durch die BET-Oberfläche; Oberflächenbeschaffenheit und Form; Nachbehandlung des Stoffes, z.B. Mahlung, Trocknung; Finish oder Oberflächenbelegung.

Für die Dispersion eines Ladungssteuermittels bedeutet leicht dispergierbar, daß sich die Ladungssteuermittelteilchen durch mechanische Kräfte leicht zerteilen lassen (z.B. durch Extrudieren, Kneten); daß die Ladungssteuermittelteilchen in ihrer zerteilten und unzerteilten Form gleichzeitig gut vom Bindemittel benetzt werden; daß die Ladungssteuermittelteilchen in ihrer zerteilten Form homogen, d.h. statistisch gleichmäßig auf alle Volumenelemente des Bindemittels, verteilt sind und dieser homogene Verteilungszustand erhalten bleibt und nicht durch Migration oder Rekristallisationseffekte nachträglich im Bindemittel verändert wird.

Für die Teilchengröße, definiert durch den d₅₀-Wert, finden sich stoffabhängig optimale Wirkbereiche. So sind beispielsweise grobe Teilchen (~ 1 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung und/oder Trocknung möglich. Hierzu bieten sich verschiedene Mahltechniken an. Vorteilhaft sind beispielsweise Luftstrahlmühlen, Schneidmühlen, Hammermühlen, Perlmühlen sowie Prallmühlen.

Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Der erfindungsgemäßen Verbindungen sind durch folgende chemisch/physikalische Eigenschaften gekennzeichnet:
Der Wasserghalt, nach der Karl-Fischer Methode bestimmt, liegt zwischen 0,1 % und 30 %, bevorzugt zwischen 1 und 25 % und besonders bevorzugt zwischen 1 und 20 %, wobei das Wasser adsorbiert und/oder gebunden sein kann, und sich dessen Anteil durch Temperatureinwirkung bis 200°C und Vakuum bis 10⁻⁸ Torr oder durch Wasserzugabe einstellen läßt.

Die Teilchengröße, mittels lichtmikroskopischer Auswertung oder Laserlichtbeugung bestimmt und definiert durch den d₅₀-Wert, liegt zwischen 0,01 µm und 1000 µm, bevorzugt zwischen 0,1 und 500 µm und ganz besonders bevorzugt zwischen 0,5 und 250 µm.

Besonders vorteilhaft ist es, wenn durch die Mahlung eine enge Teilchengröße resultiert. Bevorzugt ist ein Bereich Δ (d₉₅-d₅₀) von kleiner als 500 µm, insbesondere kleiner als 200 µm.

Die Kristallinität der Verbindungen, bestimmt durch die Röntgenbeugungs-Methode, ist hochkristallin bis teilkristallin, erkennbar durch ausgeprägte Reflexe im Röntgenbeugungsdiagramm, aufgenommen mit 2 Theta-Werten im Bereich von 2 bis 41.

Besonders bevorzugt sind Cyclodextrin-Borat-Komplexe mit einem spezifischen Durchgangswiderstand, bestimmt bei 1 kHz, zwischen 1 x 10³ Ohm x cm und 9 x 10⁶ Ohm x cm, bevorzugt zwischen 1 x 10⁵ Ohm × cm und 9 x 10¹³ Ohm x cm; sowie eine Thermostabiliät, die mittels Differentialthermoanalyse mit einer konstanten Aufheizgeschwindigkeit von 3 K/Min bestimmt wird, von größer als 200°C.

Die erfindungsgemäß verwendeten Cyclodextrin-Borat-Komplexe sind als farblose, gut dispergierbare Ladungssteuermittel besonders für Bunttoner in Kombination mit Farbmitteln geeignet. Als Farbmittel kommen in diesem Zusammenhang anorganische Pigmente, organische Farbstoffe, organische Buntpigmente, aber auch weiße Farbmittel, wie TiO₂ oder BaSO₄, Perlglanzpigmente sowie Schwarzpigmente, basierend auf Ruß oder Eisenoxiden, in Betracht.

Die erfindungsgemäß verwendeten Verbindungen werden einzeln oder in Kombination miteinander in einer Konzentration von 0,01 bis 50 Gew.-%, vorzugsweise von 0,5 bis 20 Gew.%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, eingearbeitet. Dabei können die erfindungsgemäß eingesetzten Verbindungen als getrocknete und gemahlene Pulver, Dispersionen oder Lösungen, Preßkuchen, Masterbatches, Präparationen, angeteigte Pasten, als auf geeignete Träger, wie z.B. Kieselgel, TiO₂, Al₂O₃, aus wäßriger oder nicht-wäßriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation.

Gegenstand der vorliegenden Erfindung ist auch ein elektrophotographischer Toner, Pulver oder Pulverlack, enthaltend ein übliches Bindemittel, beispielsweise ein epoxid-, carboxyl- und hydroxylgruppenhaltiges Polyester- oder Acrylharz oder eine Kombination davon, und 0,01 bis 50 Gew.-%, vorzugsweise 0,5 bis 20 Gew.-%, besonders bevorzugt 0,1 bis 5 Gew.-%, jeweils bezogen auf das Gesamtgewicht des elektrophotographischen Toners, Pulvers oder Pulverlacks, mindestens einer der genannten Cyclodextrin-Borat-Verbindungen.

Bei elektrostatischen Trennvorgängen von Polymeren und insbesondere von (Salz-)Mineralien können die erfindungsgemäßen Verbindungen auch in den oben angegebenen Mengen extern, d.h. auf die Oberfläche des zu trennenden Gutes, aufgegeben werden.

Die erfindungsgemäß verwendeten Verbindungen lassen sich auch in Ink-Jet-Tinten einsetzen, z.B. als "Elektroconductive Agents" aufgrund ihrer Leitfähigkeit und Löslichkeit, insbesondere in wäßrigen Systemen.

### Herstellungsbeispiele

### Herstellungsbeispiel 1

1 Mol (1135 g) β-Cyclodextrin (7 ringförmig verknüpfte Glucoseeinheiten) werden in 1600 ml entionisiertem Wasser bei Raumtemperatur vorgelegt und unter Rühren 200 g NaOH zugegeben. Die Temperatur steigt sogleich auf ca. 45°C, der pH bewegt sich von 7,7 auf 12,8. In die weißlich gelbe Lösung werden 2 Mol (123,7 g) Orthoborsäure eingetragen, worauf der pH-Wert auf 12,5 fällt. Nach 20 Minuten wird eine klare Lösung erhalten, die auf etwa 12°C gekühlt und in 8 l Methanol eingetragen wird. Spontan bildet sich ein weißer, vorwiegend feindisperser Niederschlag, der nach 15 Minuten abgesaugt wird. Alternativ kann das Produkt auch durch Sprühtrocknung erhalten werden. Nach dem Nachwaschen mit Methanol wird bei etwa 50°C/150 mbar im Vakuum getrocknet.
Ausbeute: 1073 g Produkt
Wassergehalt: 6,5 % nach Karl Fischer
DTA: Zersetzungsmaximum: 313°C
Elementaranalyse: 0,3 % Borgehalt
d₅₀: 36 µm
Kristallinität: hoch-kristallin, scharfe Reflexe zwischen 20 und 40 (2 Theta) spezifischer Widerstand: 1 x 10⁷ Ω·cm
BET-Oberfläche: 4,0 m²/g
pH-Wert nach Lösung: 11,9
Leitfähigkeit: 5,37 mS/cm
UV-Absorption: 266 nm (H₂O)

### Herstellungsbeispiel 2

0,01 Mol (9,72 g) α-Cyclodextrin (6 ringförmig verknüpfte Glycoseeinheiten) werden in 100 ml entionisiertem Wasser suspendiert und zur Einstellung basischer Bedingungen mit 128 g gesättigter Sodalösung versetzt, auf 70°C erhitzt und mit 0,1 Mol (6,2 g) Orthoborsäure zur Reaktion gebracht. Es wird 30 Minuten nachgerührt, abgekühlt, eingeengt und das restliche Wasser bei 80°C im Vakuum entfernt.
DTA: Zersetzung bei 258°C
Vergleich: Borsäure Schmelzpunkt 178°C
α-Cyclodextrin: Smp. 213,9°C, Zersetzung 271 °C

### Herstellungsbeispiel 3

Man verarbeitet in analoger Weise wie in Herstellungsbeispiel 2, wobei jedoch 0,01 Mol (12,97 g) γ-Cyclodextrin (8 ringförmig verknüpfte Glucoseeinheiten) eingesetzt werden.
DTA: 250°C Maximum der Zersetzung
Vergleich: Borsäure Schmelzpunkt 178°C
Vergleich: γ-Cyclodextrin: Smp. 165°C, Zersetzung 272°C

### Herstellungsbeispiel 4

Zur Isolierung mittels Sprühtrocknung werden 500 g einer Reaktionslösung aus Herstellungsbeispiel 1, 2 oder 3 vor der Ausfällung oder Trocknung bei einer Eingangstemperatur zwischen 100 und 250°C, bevorzugt zwischen 150°C und 230°C, und einer Ausgangstemperatur bei 50 bis 150°C, bevorzugt bei 80 bis 130°C, in einem konventionellen Sprühtrockner getrocknet.
Der Wassergehalt liegt zwischen 10 und 20 %, so daß gegebenenfalls im Vakuum nachgetrocknet werden muß.

In den nachfolgenden Anwendungsbeispielen bedeutet
"Verbindung 1" die α-Cyclodextrin-Borat-Verbindung aus Herstellungsbeispiel 2;
"Verbindung 2" die β-Cyclodextrin-Borat-Verbindung aus Herstellungsbeispiel 1;
"Verbindung 3" die γ-Cyclodextrin-Borat-Verbindung aus Herstellungsbeispiel 3.

### Anwendungsbeispiele

In den nachfolgenden Anwendungsbeispielen kommen folgende Tonerbindemittel und Carrier zum Einsatz:

**Tonerbindemittel:**

| | |
|---|---|
| Harz 1: | Styrol-Methacrylat-Copolymer 60:40 |
| Harz 2: | Polyester auf Bisphenol-Basis |

**Carrier:**

| | |
|---|---|
| Carrier 1: | Mit Styrol-Methacrylat-Copolymer 90:10 beschichtete Magnetit-Teilchen der Größe 50 bis 200 µm (Schüttdichte 2,62 g/cm³) (FBM 100 A; Fa. Powder Techn.). |
| Carrier 2: | Mit Silikon beschichtete Magnetit-Teilchen der Größe 50 bis 100 µm (Schüttdichte 2,75 g/cm³) (FBM 96-110; Fa. Powder Techn.) |

Nachfolgende Tabelle 1 gibt eine Übersicht über die in sämtlichen Anwendungsbeispielen eingesetzten "Verbindungen", deren Konzentrationen, Harz und Carrier.

**Tabelle 1**

| Anwendungsbeispiel | "Verbindung" | Konzentrat. an "Verbindung" | Farbmittel [5%] | Harz | Carrier |
|---|---|---|---|---|---|
| 1 | 2 | 0,5 % | - | 1 | 1 |
| 2 | 2 | 1,0 % | - | 1 | 1 |
| 3 | 2 | 2,0 % | - | 1 | 1 |
| 4 | 2 | 3,0 % | - | 1 | 1 |
| 5 | - | - | - | 1 | 1 |
| (Vergleich) | | | | | |
| 6 | 2 | 0,5 % | - | 2 | 2 |
| 7 | 2 | 1,0 % | - | 2 | 2 |
| 8 | 2 | 2,0 % | - | 2 | 2 |
| 9 | 2 | 3,0 % | - | 2 | 2 |
| 10 | - | - | - | 2 | 2 |
| (Vergleich) | | | | | |
| 11 | - | 0 % | P.R. 122⁺⁾ | 2 | 2 |
| (Vergleich) | | | | | |
| 12 | 2 | 1,0% | P.R. 122⁺⁾ | 2 | 2 |
| 13 | - | 0,0 % | P.Y. 180⁺⁺⁾ | 2 | 2 |
| (Vergleich) | | | | | |
| 14 | 2 | 1,0% | P.Y. 180⁺⁺⁾ | 2 | 2 |
| 15 | 1 | 1,0 % | - | 1 | 1 |
| 16 | 3 | 1,0 % | - | 1 | 1 |
| Vergleichsbeispiele | Cyclodextrin: | | | | |
| 1 | α | 1,0 % | - | 1 | 1 |
| 2 | β | 1,0 % | - | 1 | 1 |
| 3 | γ | 1,0 % | - | 1 | 1 |

| | | | | | |
|---|---|---|---|---|---|
| ⁺⁾ C.I. Pigment Red 122 (C.I. No. 73 915) | | | | | |
| ⁺⁺⁾ C.I. Pigment Yellow 180 (C.I. No. 21290) | | | | | |

### Anwendungsbeispiel 1

0,5 Teile der "Verbindung 2" werden mittels eines Kneters innerhalb von 45 Minuten in 99 Teile eines Tonerbindemittels (Styrol-Methacrylat-Copolymer 60:40, Harz 1, ®Dialac S 309) homogen eingearbeitet. Anschließend wird auf einer Labor-Universalmühle gemahlen und dann auf einem Zentrifulgalsichter klassifiziert. Die gewünschte Teilchenfraktion (4 bis 25 µm) wird mit einem Carrier (Carrier 1) aktiviert, der aus mit Styrol-Methacrylat-Copolymer beschichteten Magnetit-Teilchen der Größe 50 bis 200 µm besteht (Schüttdichte 2,62 g/cm³) (FBM 100 A; Fa. Powder Techn.).

### Elektrostatische Prüfung:

Die Messung erfolgt an einem üblichen q/m-Meßstand. Durch Verwendung eines Siebes mit einer Maschenweite von 50 µm wird sichergestellt, daß bei den Tonerausblasungen kein Carrier mitgerissen wird. Die Messungen erfolgen bei 50 % relativer Luftfeuchte. In Abhängigkeit von der Aktivierdauer werden die q/m-Werte (µC/g] gemessen.

Die Anwendungsbeispiele 2 bis 4, 15 und 16 werden in analoger Weise ausgeführt, wobei die jeweilige "Verbindung" und ihre Konzentration in Tabelle 1 angegeben ist.

### Anwendungsbeispiel 5 (Vergleich)

Zur Messung unter Verwendung des reinen Styrol-Acrylat-Tonerbindemittels (Styrol-Methacrylat-Copolymer 60:40, Harz 1) wird wie in Anwendungsbeispiel 1 verfahren, ohne jedoch Zusatzstoffe einzukneten (Harzblindwert). Das Tonerbindemittel wird mit einem Carrier aktiviert, der aus Styrol-Methacrylat-Copolymer beschichteten Magnetit-Teilchen der Größe 50 bis 200 µm (Schüttdichte 2,62 g/cm³) besteht (FBM 100 A; Fa. Powder Techn.).

### Anwendungsbeispiel 6

0,5 Teile der "Verbindung 2" werden mittels eines Kneters innerhalb von 45 Minuten in 99 Teile eines Tonerbindemittels (Polyester, Harz 2, ®Almacryl T500) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier (Carrier 2) aktiviert, der aus mit Silicon beschichten Ferrit-Teilchen der Größe 50 bis 100 µm besteht (FBM 96-110 Fa. Powder Techn.).

Die elektrostatische Prüfung erfolgt wie in Anwendungsbeispiel 1 beschrieben.

Die Anwendungsbeispiele 7 bis 9 erfolgen in analoger Weise (vgl. Tabelle 1).

### Anwendungsbeispiel 10 (Vergleich)

Die Herstellung erfolgt analog Anwendungsbeispiel 5, wobei anstelle von Harz 1 Harz 2 verwendet wird und die Aktivierung mit Carrier 2 erfolgt.

### Anwendungsbeispiel 11 (Vergleich)

Der Toner wird hergestellt, indem 5 Teile des organischen Buntpigments C.I. Pigment Red 122 in 95 Teile des Polyester-Tonerbindemittels (Harz 2) homogen eingearbeitet und, nach Aktivierung mit Carrier 2, vermessen werden.

### Anwendungsbeispiel 12

Der Toner wird in analoger Weise hergestellt, wobei 5 Teile Buntpigment und 1 Teil "Verbindung 2" in 94 Teilen Tonerbindemittel (Harz 2) eingearbeitet und, nach Aktivierung mit Carrier 2, vermessen werden.

### Anwendungsbeispiel 13 (Vergleich)

Die Herstellung erfolgt analog Anwendungsbeispiel 11, wobei anstelle von C.l. Pigment Red 122 C.I. Pigment Yellow 180 eingesetzt wird.

### Anwendungsbeispiel 14

Die Herstellung erfolgt analog Anwendungsbeispiel 12, wobei anstelle von C.I. Pigment Red 122 C.I. Pigment Yellow 180 eingesetzt wird.

### Vergleichsbeispiele 1 bis 3

Die Herstellung und Messung erfolgt analog Anwendungsbeispiel 2, wobei α-, β- oder γ-Cyclodextrin anstelle einer erfindungsgemäßen "Verbindung" homogen eingearbeitet und vermessen werden.

Die Ergebnisse der elektrostatischen Prüfungen sind als zeitabhängig bestimmte q/m-Werte [µC/g] in Tabelle 2 zusammengefaßt: "Min" bedeutet "Minuten" und "h" bedeutet "Stunden" Aktivierdauer; Luftfeuchte 40 bis 60 %.

**Tabelle 2**

| Anwendungsbeispiel | 10 Min | 30 Min | 2 h | 24 h |
|---|---|---|---|---|
| Styrolacrylatharz | | | | |
| 1 | -5 | -8 | -14 | -28 |
| 2 | -7 | -10 | -20 | -34 |
| 3 | -8 | -13 | -21 | -36 |
| 4 | -15 | -29 | -39 | -46 |
| 5 (Vergleich) | -7 | -11 | -16 | -22 |

| Polyesterharz | | | | |
|---|---|---|---|---|
| 6 | -22 | -24 | -25 | -24 |
| 7 - | -22 | -24 | -25 | -24 |
| 8 | -22 | -25 | -26 | -26 |
| 9 | -25 | -28 | -32 | -32 |
| 10 (Vergleich) | -14 | -14 | -14 | -9 |
| 11 (Vergleich) | +1 | +3 | +1 | 0 |
| 12 | -12 | -12 | -10 | -10 |
| 13 (Vergleich) | -6 | -6 | -9 | -9 |
| 14 | -13 | -13 | -12 | -13 |

| Styrolacrylatharz | | | | |
|---|---|---|---|---|
| 15 | -12 | -17 | -16 | -10 |
| 16 | -14 | -20 | -30 | -40 |

| Vergleichsbeispiel | | | | |
|---|---|---|---|---|
| 1 | -13 | -18 | -21 | -25 |
| 2 | -11 | -19 | -22 | -25 |
| 3 | -10 | -15 | -18 | -20 |

Die Ergebnisse in Tabelle 2 belegen die hohe Effizienz der erfindungsgemäß verwendeten "Verbindungen". Anwendungsbeispiel 5 und 10 zeigen die Bindemittelsysteme ohne Zusatz einer "Verbindung". Der erfindungsgemäß verwendete Zusatz bewirkt bereits bei geringen Mengen (0,5 %) überraschend einen signifikanten triboelektrischen Einfluß. Bei Styrolacrylatharzen als Tonerbindemittel zeigt sich, daß durch die Konzentration der zugesetzten "Verbindung" eine definierte Aufladungshöhe eingestellt werden kann. Um ein hohes (negatives) Ladungsniveau zu erreichen, kann die Konzentration der zugesetzten "Verbindung" erhöht und/oder die Aktivierdauer verlängert werden (Anwendungsbeispiele 1 bis 4).

Bei Polyesterharzen als Tonerbindemittel, die überwiegend für Farbtoner verwendet werden, zeigt sich einerseits eine rasche Aufladung auf ein hohes (negatives) Ladungsniveau bereits bei geringen Konzentrationen der zugesetzten "Verbindung", und andererseits eine ausgezeichnete Konstanz dieses Ladungsniveaus bei längeren Aktivierzeiten (Anwendungsbeispiele 6 bis 9).

Die Anwendungsbeispiele 11 und 13 zeigen ein typisches Magenta-Pigment (P.R. 122) und ein typisches Gelbpigment (P.Y. 180) ohne Zusatz einer "Verbindung", d.h. Farbmittel zeigen oftmals eine ausgeprägte Eigenaufladung. Nur 1 % der zugesetzen "Verbindung" drückt die reibungselektrische Eigenaufladung des Farbmittels in ein konstantes Niveau, welches dann unabhängig vom verwendeten Farbmittel ist.

## Patentansprüche

1. Verwendung eines Cyclodextrin-Borat-Komplexis, bestehend aus 1 bis 4 Cyclodextrin-Einheiten und einem Borat-Rest der Formel (I) 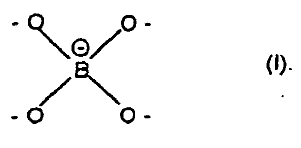 als Ladungssteuermittel und Aufladungsverbesserer in elektrophotographischen Tonern und Entwicklern, in triboelektrisch oder elektrokinetisch versprühbaren Pulvern und Pulverlacken und in Elektretmaterialien.

2. Verwendung nach Anspruch 1, **dadurch gekennzeichnet, daß** das Cyclodextrin α-Cyclodextrin, β-Cyclodextrin, γ-Cyclodextrin, Methyl-α-cyclodextrin, Methyl-β-cyclodextrin, Methyl-γ-cyclodextrin, Acetyl-β-cyclodextrin oder Acetyl-γ-cyclodextrin ist.

3. Verwendung nach Anspruch 1 oder 2, **dadurch gekennzeichnet, daß** 1 oder 2 Cyclodextrin-Einheiten vorhanden sind.

4. Verwendung nach mindestens einem der Ansprüche 1 bis 3, **dadurch gekennzeichnet, daß** der Borgehalt, durch Elementaranalyse bestimmt, zwischen 0,1 und 5 Gew.-%, liegt.

5. Elektrophotographischer Toner, Pulver oder Pulverlack, enthaltend ein übliches Bindemittel und 0,01 bis 50 Gew.-%, vorzugsweise 0,5 bis 20 Gew.-%, jeweils bezogen auf das Gesamtgewicht, mindestens eines Cyclodextrin-Borat-Komplexes gemäß einem oder mehreren der Ansprüche 1 bis 4.

6. Verfahren zur Herstellung eines elektrophotographischen Toners, Pulvers oder Pulverlacks, **dadurch gekennzeichnet, daß** man mindestens einen Cyclodextrin-Borat-Komplex gemäß einem oder mehreren der Ansprüche 1 bis 4 in einer Konzentration von 0,01 bis 50 Gew.-%, vorzugsweise 0,5 bis 20 Gew.-%, jeweils bezogen auf das Gesamtgewicht, in ein für elektrophotographische Toner, Pulver oder Pulverlacke übliches Bindemittel homogen einarbeitet.

## Claims

1. The use of a cyclodextrin-borate complex consisting of from 1 to 4 cyclodextrin units and one borate radical of the formula (I) 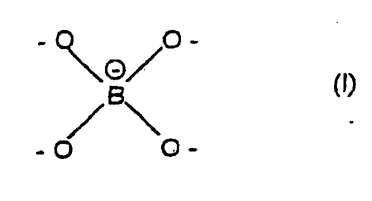 as a charge control agent or charging improver in an electrophotographic toner or developer, a triboelectrically or electrokinetically sprayed powder or powder coating, or in an electret material.

2. The use as claimed in claim 1, wherein the cyclodextrin is α-cyclodextrin, β-cyclodextrin, γ-cyclodextrin, methyl-α-cyclodextrin, methyl-β-cyclodextrin, methyl-γ-cyclodextrin, acetyl-β-cyclodextrin or acetyl-γ-cyclodextrin.

3. The use as claimed in claim 1 or 2, wherein 1 or 2 cyclodextrin units are present.

4. The use as claimed in at least one of claims 1 to 3, wherein the boron content as determined by elemental analysis is between 0.1 and 5% by weight.

5. An electrophotographic toner, powder or powder coating comprising a customary binder and from 0.01 to 50% by weight, preferably from 0.5 to 20% by weight, based in each case on the overall weight, of at least one cyclodextrin-borate complex as claimed in one or more of claims 1 to 4.

6. A process for preparing an electrophotographic toner, powder or powder coating, which comprises homogeneously incorporating at least one cyclodextrin-borate complex as claimed in one or more of claims 1 to 4 in a concentration of from 0.01 to 50% by weight, preferably from 0.5 to 20% by weight, based in each case on the overall weight, into a binder customary for electrophotographic toners, powders or powder coatings.

## Revendications

1. Utilisation d'un complexe cyclodextrine-borate constitué de 1 à 4 unités cyclodextrine et d'un radical borate de formule (I) 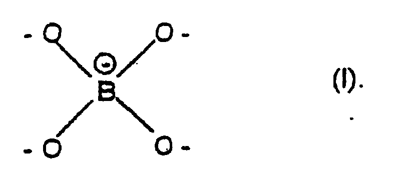 en tant qu'agent de réglage de charge et agent d'amélioration de charge dans des toners et développeurs électrophotographiques, dans des poudres et peintures en poudre pulvérisables par voie triboélectrique ou électrocinétique et dans des matériaux électret.

2. Utilisation selon la revendication 1, **caractérisée en ce que** la cyclodextrine est l'α-cyclodextrine, la β-cyclodextrine, la γ-cyclodextrine, la méthyl-α-cyclodextrine, la méthyl-β-cyclodextrine, la méthyl-γ-cyclodextrine, l'acétyl-β-cyclodextrine ou l'acétyl-γ-cyclodextrine.

3. Utilisation selon la revendication 1 ou 2, **caractérisée en ce que** sont présentes 1 ou 2 unités cyclodextrine.

4. Utilisation selon au moins l'une des revendications 1 à 3, **caractérisée en ce que** la teneur en bore, déterminée par analyse élémentaire, est comprise entre 0,1 et 5 % en poids.

5. Toner électrophotographique, poudre ou peinture en poudre, contenant un liant usuel et de 0,01 à 50 % en poids, de préférence de 0,5 à 20 % en poids, chaque fois par rapport au poids total, d'au moins un complexe cyclodextrine-borate selon une ou plusieurs des revendications 1 à 4.

6. Procédé pour la préparation d'un toner électrophotographique, d'une poudre ou d'une peinture en poudre, **caractérisé en ce qu'**on incorpore de façon homogène au moins un complexe cyclodextrine-borate selon une ou plusieurs des revendications 1 à 4, à une concentration de 0,01 à 50 % en poids, de préférence de 0,5 à 20 % en poids, chaque fois par rapport au poids total, dans un liant usuel pour toners électrophotographiques, poudres ou peintures en poudre.
